# EUROPEAN PATENT SPECIFICATION

(11) **EP 1 363 037 B1**
(45) Date of publication and mention of the grant of the patent: **17.11.2010**
(21) Application number: 03009839.6
(22) Date of filing: 13.05.2003
(51) Int. Cl.: F16D 11/10, F16D 23/08

(54) **Claw clutch with engagement and disengagement executable during motion**
Während der Drehung ein- und ausrückbare Klauenkupplung
Accouplement à crabot embrayable et débrayable en rotation

(30) Priority: 16.05.2002 IT MO20020131
(43) Date of publication of application: 19.11.2003
(73) Proprietor: Comer Industries S.p.A, Milano (IT)
(72) Inventor: Mora, Fausto, 46029 Suzzara (IT); Pellacani, Gianfranco, 42015 Correggio (IT)
(74) Representative: Modiano, Micaela Nadia

(56) References cited:
- GB-A- 334 503
- US-A- 5 816 378

## Description

The present invention relates to a claw clutch with engagement and disengagement executable during motion.

Claw clutches allow to mate two bodies that can rotate about a common rotation axis, making them rotate rigidly together; the clutches are associated with actuation means that are suitable to provide and interrupt the mating of the two bodies.

Claw clutches which can be engaged and disengaged even during motion, i.e., in conditions of relative rotation of one body with respect to the other, are known, see for instance GB-A-334503.

Known clutches substantially comprise a first body, which is provided with first teeth, can rotate freely about the rotation axis and is axially fixed with respect to said axis, and a second body, which is provided with second teeth, which face the first teeth and can be meshed therewith (can engage in the spaces formed between them), and is rotationally rigidly coupled about the rotation axis and free to slide axially along said rotation axis.

The second body slides along the rotation axis between an engagement configuration, in which the second teeth are meshed with the first teeth and the two bodies are rotationally rigidly coupled to each other in order to transmit motion between the second body and the first body, and a disengagement configuration, in which the second teeth are not meshed with the first teeth and the two bodies are mutually disconnected in order to interrupt the transmission of motion between them.

The second body is associated with pusher means, such as a spring, which keep it in the engagement configuration, and with actuation means, such as a lever system, which by contrasting the action of the pusher means cause the sliding of the second body along the rotation axis away from the first body, in order to move it from the engagement configuration to the disengagement configuration, and allow its subsequent return to the engagement configuration under the action of the pusher means.

Each one of the two bodies has a face that is directed toward the other body; on the face of one of the two bodies there is an annular surface that is coaxial to the rotation axis and there is a slot that runs along a circumferential portion of the annular surface.

On the face of the other body there is a pin, which is substantially parallel to the rotation axis and which, if the first and second teeth are in an angular position of mutual interference when engagement is to be performed, slides on the annular surface formed on the other body, keeping the two bodies mutually disengaged and preventing the first teeth from meshing with the second teeth.

The dimensions and the position of the slot with respect to the teeth are such that when the first and second teeth are in an angular position in which they do not interfere, the pin is inserted axially in the slot, the teeth are mutually meshed and the two bodies are mutually engaged; in this configuration, the pin is not in contact with the ends of the slot.

These claw clutches are not free from drawbacks, including the fact that they require at least one of the two bodies of the clutch to be oversized and therefore have significant dimensions, which limit their fields of use, particularly if they are structured so as to ensure, in passing between the disengagement configuration and the engagement configuration, a minimum time for the teeth to face each other completely.

The aim of the present invention is to eliminate the above-mentioned drawbacks of known claw clutches, by providing a claw clutch with engagement and disengagement executable during motion which, for an equal strength, allows to contain the dimensions of the bodies that constitute it, is smaller and compact with respect to known clutches, and ensures, in passing from the disengagement configuration to the engagement configuration, a minimum time for the teeth to face each other completely before they mesh.

Within this aim, an object of the present invention is to provide a structure that is simple, relatively easy to provide in practice, safe in use, effective in operation and has a relatively low cost.

This aim and this object are achieved by the present claw clutch with engagement and disengagement executable during motion, which is provided about a rotation axis, and comprising a first engageable body, which is provided with first teeth, can rotate freely about said rotation axis and is axially fixed with respect to said axis in at least one direction, and a second engageable body, which is provided with second teeth that face said first teeth and can be meshed with said teeth, is rotationally coupled about said rotation axis and can slide freely axially along the axis between an engagement configuration, in which the second teeth are meshed with the first teeth and the two bodies are coupled so as to rotate rigidly together, and a disengagement configuration, in which the second teeth are uncoupled from the first teeth and the two bodies are mutually uncoupled, characterized in that it comprises at least one substantially elongated element that is associated with one of said first and second bodies so that it can move along a direction that is incident to said rotation axis or to an axis that is substantially parallel thereto, and a collar, which is formed on the other body of the first and second bodies, is substantially coaxial to the rotation axis and has a front face for the abutment of said elongated element and at least one substantially longitudinal groove that is formed proximate to its outer lateral surface for mating with the elongated element, the elongated element being suitable to assume a locking configuration, in which it abuts against said front abutment face and is suitable to prevent, by constituting an obstacle, the mutual engagement of the first and second bodies, the first and second teeth being mutually uncoupled, and a release configuration, in which it is coupled to said groove and is suitable to slide along said direction in order to allow the mutual engagement of the first and second bodies, the first and second teeth being able to mesh.

Further characteristics and advantages of the present invention will become better apparent from the following detailed description of a preferred but not exclusive embodiment of a claw clutch with engagement and disengagement executable during motion, illustrated by way of non-limitative example in the accompanying drawings, wherein:
Figure 1 is a longitudinal sectional view of a gear drive provided with a claw clutch according to the invention in the disengagement configuration;
Figure 2 is a reduced-scale longitudinal sectional view of the gear drive of Figure 1, with the elongated element of the clutch according to the invention in the locking configuration;
Figure 3 is a reduced-scale longitudinal sectional view of the gear drive of Figure 1, with the elongated element of the clutch according to the invention in the release configuration during the transition of the clutch from the disengagement configuration to the engagement configuration;
Figure 4 is a reduced-scale longitudinal sectional view of the gear drive of Figure 1, with the clutch according to the invention in the engagement configuration;
Figure 5 is a sectional view, taken along the line V-V of Figure 2;
Figure 6 is a front view of the first body of the clutch of Figure 1;
Figure 7 is a transverse sectional view of a first tooth of the first body of Figure 6;
Figure 8 is a front view of the second body of the clutch of Figure 1;
Figure 9 is a transverse sectional view of a second tooth of the second body of Figure 8.

With reference to the figures, the reference numeral 1 generally designates a clutch with front teeth that allows engagement and disengagement during motion.

The clutch 1 is mounted on a shaft 2, whose longitudinal axis defines the rotation axis A, of a gear drive 3.

The clutch 1 comprises a first engageable body, which is associated with a bevel crown gear 4 and is provided with first teeth 5, between which first spaces 6 remain, and a second engageable body, which is associated with a sleeve 7 and is provided with second teeth 8, between which second spaces 9 are formed; the second teeth face the first teeth 5 and can mesh with them.

Conveniently, the first and second teeth 5 and 8, in a sectional view taken at right angles to the rotation axis A, have a shorter circumferential length than the first and second spaces 6 and 9.

The bevel crown gear 4 is mounted coaxially on the shaft 2 so that it can rotate freely about the shaft and is axially fixed with respect to the shaft in at least one direction; in particular, on the lateral surface of the shaft 2, at the hub of the bevel crown gear 4, there is a spiral groove 10 that allows the bevel crown gear 4 to rotate freely with respect to the shaft 2.

The sleeve 7 is keyed on the shaft 2 by way of a splined coupling 11; the sleeve 7 is rotationally coupled to the shaft 2 (rotation axis A) but can slide freely axially along said shaft, in both directions, between an engagement configuration, in which the second teeth 8 mesh with the first teeth 5 and the two bodies of the clutch 1, i.e., the bevel crown gear 4 and the sleeve 7, are coupled so as to rotate rigidly together, and a disengagement configuration, in which the second teeth 8 are uncoupled from the first teeth 5 and the two bodies of the clutch 1, i.e., the bevel crown gear 4 and the sleeve 7, are mutually disengaged.

The sliding of the sleeve 7 along the shaft 2 is actuated by a system of levers 12, which comprises an actuation shaft 13 on which a hub 14 is keyed; the end of a lever 15 is coupled to the hub and the lever is articulated, at the opposite end, to a C-shaped profiled element 16 that surrounds with play the sleeve 7, on which there is a first abutment shoulder 17.

A first spring 18, wound around the shaft 2 upstream of the sleeve 7, acts between a safety ring 19, which is fitted in an annular groove 20 formed on the shaft 2, and a second shoulder 21, which is formed at the end of the sleeve 7; the first spring 18 is preloaded so as to make the sleeve 7 tend to assume the configuration for engagement with the bevel crown gear 4.

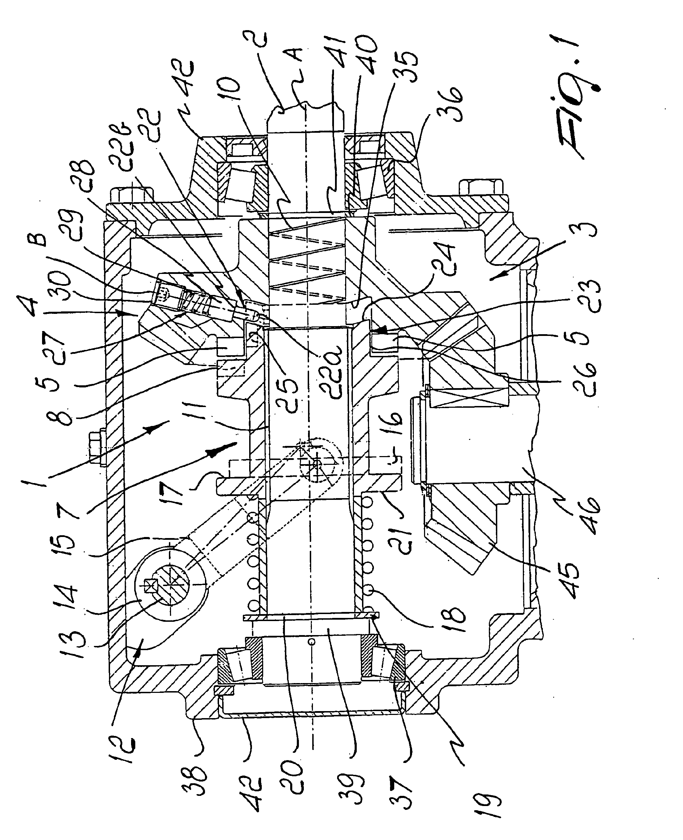

The rotation of the actuation shaft 13 in one direction (clockwise in Figure 1) is such that the profiled element 16, pushed by the lever 15, acts against the first shoulder 17 and, by overcoming the force of the first spring 18, moves the sleeve 7 from the engagement configuration to the disengagement configuration, while the rotation of the actuation shaft 13 in the opposite direction leaves the sleeve 7 free to return from the disengagement configuration to the engagement configuration, pushed by the reaction of the first spring 18.

In order to prevent the first teeth 5 and the second teeth 8 from mutually interfering during the transition between the disengagement configuration and the engagement configuration due to their mutual angular position, the clutch 1 is provided with a control mechanism.

Such mechanism comprises a substantially elongated element, which is constituted by a cylindrical rod 22 (pin, stem), which is associated with the bevel crown gear 4 and is arranged so that its longitudinal axis B is parallel to a direction that is incident to the rotation axis A, or to an axis that is substantially parallel thereto, and a collar 23, which is formed in the sleeve 7, is coaxial to the rotation axis A, and is provided with a front face 24 for the abutment of the rod 22 and with a plurality of substantially longitudinal grooves 25 that are formed proximate to its outer lateral surface 26 and can be mated with the rod 22.

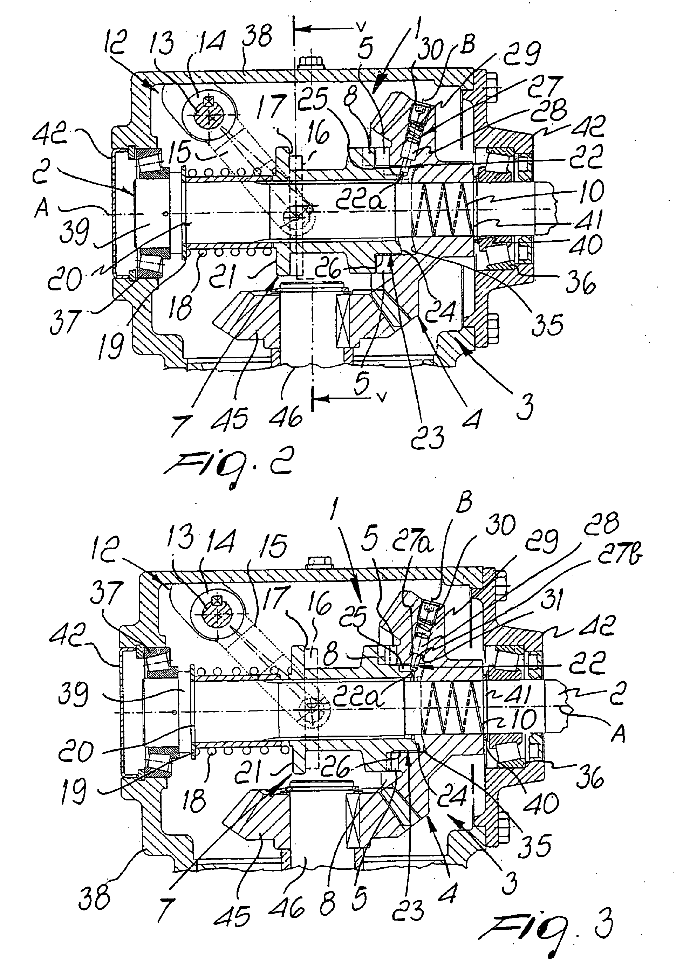

In the transition of the sleeve 7 from the disengagement configuration to the configuration for engagement with the bevel crown gear 4, the rod 22 is suitable to assume a locking configuration (Figure 2), in which it abuts against the front face 24 in order to prevent, by constituting an obstacle, engagement between the sleeve 7 and the bevel crown gear 4, the first teeth 5 and the second teeth 8 being mutually uncoupled and in a mutual angular position of interference, and, following the rotation of the sleeve 7 through a preset angle, a release configuration, in which the rod is coupled to a groove 25 in order to allow the mutual engagement of the sleeve 7 and the bevel crown gear 4, the first teeth 5 and the second teeth 8 being in a mutual angular configuration in which they do not interfere with each other and allow meshing (Figure 3).

The rod 22 can move with a reciprocating rectilinear motion along its longitudinal axis B, is inserted so that it can slide axially in a seat 27 formed within the bevel crown gear 4, and has a first end 22a that protrudes therefrom and is advantageously shaped so as to have a convex curvilinear shape, for example a spherical dome-like shape.

The rod 22 rotates rigidly with the bevel crown gear 4.

The rod 22 has, at its opposite end 22b, an expansion 28 on which pusher means act which are constituted for example by a second compression spring 29, which is accommodated in the seat 27 and can be preloaded by means of a grub screw 30; the second spring 29 is suitable to keep the rod 22 in the locking configuration.

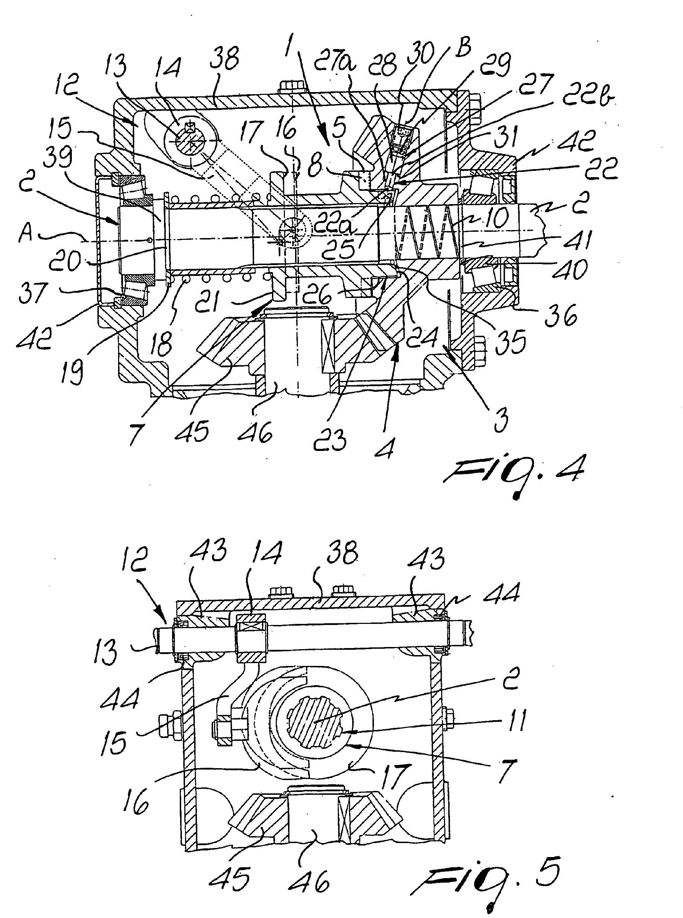

Conveniently, the seat 27 comprises a surface 27a for stopping the sliding of the rod 22 in the locking configuration, a complementary abutment surface 31 being formed around the rod 22 (Figure 4).

In a sectional view taken at right angles to the rotation axis A, the grooves 25 are distributed with a constant pitch along the circumference of the collar 23 and are also equal in number to the second teeth 8; each groove is formed proximate to a side 8a of a respective second tooth 8, and the collar 23 is enclosed between the second teeth 8.

Advantageously, the grooves 25 run substantially parallel to the rotation axis A and have a bottom that is arranged substantially at the level of the first end 22a of the rod 22 when the rod is in the locking configuration.

As an alternative, the bottom of the grooves 25 is arranged at a greater radial distance, with respect to the rotation axis A, than the first end 22a of the rod 22 when it is in the locking configuration; in this case, the bottom is provided with a guiding profile that is suitable to accommodate the first end 22a, overcoming the resistance of the second spring 29, which is appropriately preloaded, in the transition between the locking configuration and the release configuration, and to avoid generating forces that are parallel to the axis B when the rod 22 is in the locking configuration.

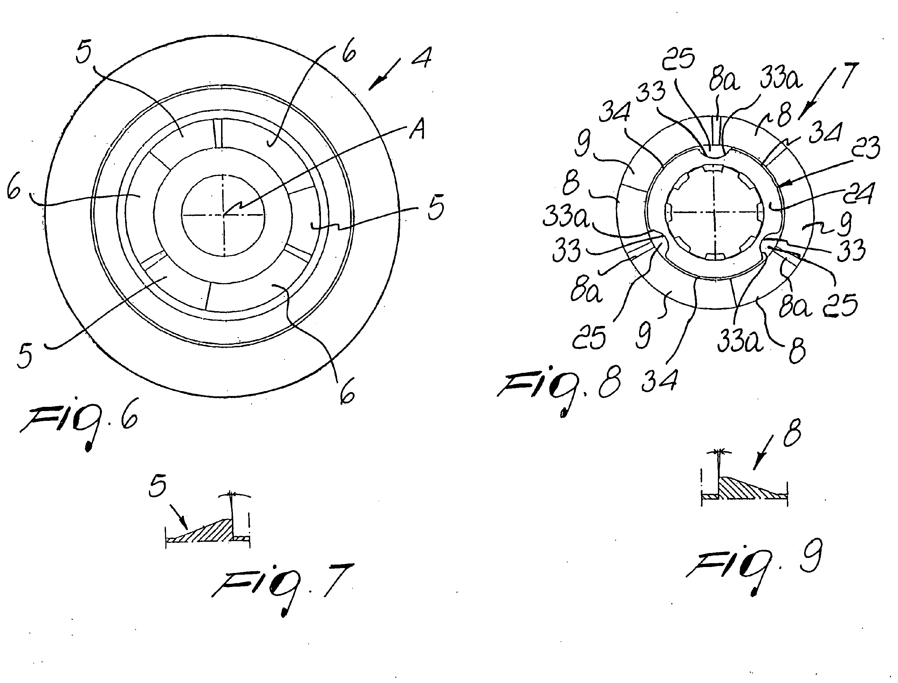

The collar 23 is provided with a cam 32 (Figure 8) that is formed on its outer lateral surface 26 and along the profile of which the first end 22a of the rod 22 can slide, in contrast with the second spring 29, in the transition between the release configuration and the engagement configuration of the sleeve 7 with respect to the bevel crown gear 4.

The profile of the cam 32, in a sectional view taken at right angles to the rotation axis A, comprises troughs 33, which are formed at the grooves 25 and are laterally blended with curved arcs 34.

The troughs 33 are provided with a lateral ramp 33a for the sliding of the first end 22a of the rod 22 that allows, in the transition between the disengagement configuration and the engagement configuration, the first teeth 5 and the second teeth 8 to face each other fully before they mesh.

The front face 24 of the collar 23 is formed by a ring that is substantially frustoconical and whose generatrix is a straight line that is substantially parallel to the longitudinal axis B of the rod 22; it is therefore such as to make contact with the outer lateral surface of the rod 22. The collar 23 is formed so as to protrude from the face of the sleeve 7 at which the second teeth 8 are formed and protrudes with respect to said teeth; a complementary cavity 35 is instead formed in the bevel crown gear 4 and accommodates the collar 23 when the sleeve 7 and the bevel crown gear 4 are in the engagement configuration, the first teeth 5 protruding with respect to the cavity 35.

The shaft 2 is supported by end bearings 36 and 37, which are accommodated within the box-like structure 38 of the drive 3; conveniently, the relative axial position of the first spring 18, of the sleeve 7 and of the bevel crown gear 4 is delimited by an annular abutment 39, which is formed on the shaft 2 upstream of the safety ring 19, and by a stop ring 40, which is accommodated in a groove 41 formed in the shaft 2 downstream of the bevel crown gear 4; in this manner, the first spring 18, the sleeve 7 and the bevel crown gear 4 do not apply axial forces directly to the bearings 36 and 37 and their relative axial position, as well as the reaction of the first spring 18, are substantially independent of the registration of the two bearings 36 and 37.

Moreover, the box-like structure 38 is provided with covers 42 that are arranged at the bearings 36 and 37 and with supports 43 that accommodate bearings 44 for supporting the actuation shaft 13.

The bevel crown gear 4 is coupled to a complementarily shaped bevel crown gear 45 that is keyed on a shaft 46 that is perpendicular to the shaft 2.

The operation of the invention is as follows:

In the configuration in which the sleeve 7 is disengaged from the bevel crown gear 4 (Figure 1), the abutment surface 31 of the rod 22 is in contact with the abutment surface 27a of the seat 27 and the first end 22a of the rod 22 protrudes out of the seat 27 and is uncoupled, i.e., not in contact, with respect to the front face 24 of the collar 23.

When moving from the disengagement configuration to the engagement configuration, if the first teeth 5 and the second teeth 8 are in a mutual angular position by way of which they can mutually interfere, the rod 22 assumes the locking configuration (Figure 2), in which its outer lateral surface makes tangential contact with the front face 24 of the collar 23, preventing, by constituting an obstacle, the sliding of the sleeve 7 toward the bevel crown gear 4.

The contact between the front face 24 and the rod 22 is such that it does not generate forces in a direction that is parallel to the longitudinal axis B of the rod 22, thus preventing the rod 22 from sliding axially, overcoming the resistance of the second spring 29, and remaining in the locking configuration until, following a rotation of the sleeve 7 through a preset angle, the first teeth 5 and the second teeth 8 are in a position in which they do not mutually interfere.

In this last position (Figure 3), a groove 25 is located proximate to the first end 22a of the rod 22 and engagement between the sleeve 7 and the bevel crown gear 4 begins; the rod 22 is in the release configuration, in which its first end 22a mates with (engages in) the groove 25, thus overcoming the obstacle provided by the front face 24.

In the release configuration, the first end 22a of the rod 22 is in contact with the bottom of the groove 25, while its outer lateral surface does not make contact with the sides of the groove 25; this avoids the transmission of torque between the sleeve 7 and the bevel crown gear 4 during transition from their disengagement configuration to their engagement configuration.

During this last transition, the sleeve 7, which can slide freely axially along the shaft 2, engages the bevel crown gear 4, while the first end 22a of the rod 22 follows the profile of the cam 32, moving from the trough 33, which corresponds to the groove 25, to the arc 34 that is adjacent thereto, overcoming the force of the second spring 29.

The ramp 33a ensures a minimum time during which the first and second teeth 5 and 8 face each other completely before mutually meshing; this avoids the transmission of torque before the sleeve 7 has fully engaged the bevel crown gear 4.

The profile of the cam 32 and the preloading of the second spring 29 are such that they do not hinder the axial sliding of the sleeve 7 toward the bevel crown gear 4 and do not generate a substantial transmission of torque between the sleeve 7 and the bevel crown gear 4 due to contact between the cam 32 and the rod 22 and from there to the bevel crown gear 4 inside which it is accommodated.

When the clutch 1 is moved from the engagement configuration to the disengagement configuration by way of the lever system 12, the second spring 29 returns the rod 22 to the locking configuration.

The clutch 1 allows the sleeve 7 to pass from the configuration for disengagement with respect to the bevel crown gear 4 to the configuration for engagement therewith also in conditions of relative motion of the sleeve with respect to said bevel crown gear without causing interference between the respective second teeth 8 and first teeth 5, but ensuring a correct mutual angular position thereof.

In practice it has been found that the described invention achieves the intended aim and object.

The invention thus conceived is susceptible of numerous modifications and variations, as long as they are within the scope of the appended claims.

All the details may further be replaced with other technically equivalent elements.

In practice, the materials employed, as well as the shapes and the dimensions, may be any according to requirements without thereby abandoning the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A claw clutch with engagement and disengagement executable during motion, provided about a rotation axis (A) and comprising a first engageable body (4), which is provided with first teeth (5), can rotate freely about said rotation axis and is axially fixed with respect to said axis in at least one direction, and a second engageable body (7), which is provided with second teeth (8) that face said first teeth (5) and can be meshed with said teeth, is rotationally coupled about said rotation axis (A) and can slide freely axially along said axis between an engagement configuration, in which the second teeth are meshed with the first teeth and the two bodies are coupled so as to rotate rigidly together, and a disengagement configuration, in which the second teeth are uncoupled from the first teeth and the two bodies are mutually uncoupled, **characterized in that** it comprises at least one substantially elongated element (22) that is associated with one (4) of said first and second bodies (4,7) so that it can move along a direction (B) that is inclined to said rotation axis (A) or to an axis that is substantially parallel thereto, and a collar (23), which is formed on the other body (7) of said first and second bodies, is substantially coaxial to said rotation axis and has a front face (24) for the abutment of said elongated element (22) and at least one substantially longitudinal groove (25) that is formed proximate to its outer lateral surface for mating with said elongated element, said elongated element being suitable to assume a locking configuration, in which it abuts against said front abutment face (24) and is suitable to prevent, by constituting an obstacle, the mutual engagement of said first and second bodies, the first and second teeth being mutually uncoupled, and a release configuration, in which it is coupled to said groove and is suitable to slide along said direction (B) in order to allow the mutual engagement of said first and second bodies, the first and second teeth being able to mesh.

2. The clutch according to claim 1, **characterized in that** said elongated element (22) is provided with a longitudinal axis that is substantially parallel to said direction and can move with a reciprocating rectilinear motion along it.

3. The clutch according to one or more of the preceding claims, **characterized in that** said elongated element is inserted so that it can slide axially in a seat formed in one of said first and second bodies and so that it has a first end that protrudes from said seat.

4. The clutch according to one or more of the preceding claims, **characterized in that** it comprises pusher means (29) that are associated with said elongated element and are suitable to keep it in said locked configuration.

5. The clutch according to one or more of the preceding claims, **characterized in that** said pusher means comprise at least one preloadable compression spring that can be accommodated in said seat.

6. The clutch according to one or more of the preceding claims, **characterized in that** said seat comprises a surface (31) for stopping the sliding of said elongated element in said locking configuration, said locking element being provided with a complementarily shaped abutment surface (27a).

7. The clutch according to one or more of the preceding claims, **characterized in that** said collar (23) is provided with a plurality of said grooves (25), which in a sectional view taken at right angles to said rotation axis are distributed with a constant pitch.

8. The clutch according to one or more of the preceding claims, **characterized in that** the number of said grooves is equal to the number of said teeth of the first or second bodies, each groove being formed proximate to a side of a respective tooth.

9. The clutch according to one or more of the preceding claims, **characterized in that** said grooves run substantially parallel to said rotation axis.

10. The clutch according to one or more of the preceding claims, **characterized in that** said grooves have a bottom that is substantially flush with said first end of the elongated element in said locking configuration.

11. The clutch according to one or more of the preceding claims, **characterized in that** said grooves have a bottom that is arranged at a greater radial distance, with respect to said rotation axis, than said first end of the elongated element (22) in said locking configuration, said bottom being provided with a guiding profile that is suitable to accommodate, in contrast with said pusher means, said first end of the elongated element in the transition between said locking configuration and said release configuration.

12. The clutch according to one or more of the preceding claims, **characterized in that** said collar (23) is provided with a cam that is formed on its outer lateral surface and along the profile of which said first end of the elongated element can slide, in contrast with said pusher means, in the transition from said release configuration to said engagement configuration of the first and second bodies.

13. The clutch according to one or more of the preceding claims, **characterized in that** said profile of the cam, in a sectional view taken at right angles to said rotation axis, comprises troughs that are formed at said grooves and are laterally blended with curvilinear arcs.

14. The clutch according to one or more of the preceding claims, **characterized in that** said troughs are provided with a ramp for the sliding of said first end of the elongated element which allows, in the transition from said disengagement configuration to said engagement configuration, said first and second teeth to face each other fully before they mesh.

15. The clutch according to one or more of the preceding claims, **characterized in that** the front face of said collar is formed by a ring that is substantially frustoconical and whose generatrix is a straight line that is substantially parallel to said longitudinal axis of the elongated element.

16. The clutch according to one or more of the preceding claims, **characterized in that** in said locking configuration said front face is in contact with the outer lateral surface of said elongated element, said contact being suitable to avoid generating forces along said direction.

17. The clutch according to one or more of the preceding claims, **characterized in that** in said release configuration said first end of the elongated element is in contact with the profile of said groove.

18. The clutch according to one or more of the preceding claims, **characterized in that** in said engagement configuration said first end of the elongated element is in contact with a curvilinear arc of the profile of said cam.

19. The clutch according to one or more of the preceding claims, **characterized in that** said collar is formed so as to protrude from the face of one of said first and second bodies at which the respective first and second teeth are provided and protrudes with respect to them, a complementary cavity being formed in the other one of said first and second bodies in order to accommodate said collar in said engagement configuration, the teeth of said other body protruding with respect to said cavity.

20. The clutch according to one or more of the preceding claims, **characterized in that** said elongated element is constituted by a cylindrical rod, said first end having a curvilinear convex shape.

21. The clutch according to one or more of the preceding claims, **characterized in that** a respective space is formed between two of said first or second teeth of the first and second bodies, in a sectional view taken at right angles to said rotation axis, said space being circumferentially longer than said teeth.

## Patentansprüche

1. Eine während der Drehung ein- und ausrückbare Klauenkupplung, um eine Rotationsachse (A) vorgesehen und aufweisend einen ersten einrückbaren Körper (4), der mit ersten Zähnen (5) versehen ist, um die Rotationsachse frei rotieren kann und in Bezug auf die Achse in mindestens einer Richtung axial fixiert ist, und einen zweiten einrückbaren Körper (7), der mit zweiten Zähnen (8) versehen ist, die den ersten Zähnen (5) zugewandt sind und mit den Zähnen in Eingriff gebracht werden können, der um die Rotationsachse (A) rotierend gekuppelt ist und entlang der Achse zwischen einer Einrückkonfiguration, in der die zweiten Zähne in die ersten Zähne greifen und die zwei Körper so gekuppelt sind, dass sie starr zusammen rotieren, und einer Ausrückkonfiguration, in der die zweiten zähne von den ersten Zähnen entkuppelt sind und die zwei Körper voneinander entkuppelt sind, axial frei gleiten kann, **dadurch gekennzeichnet, dass** sie mindestens ein im Wesentlichen längliches Element (22), das mit einem (4) des ersten und des zweiten Körpers (4, 7) so verbunden ist, dass es sich entlang einer Richtung (B) bewegen kann, die zur Rotationsachse (A) oder zu einer zu ihr im Wesentlichen parallelen Achse geneigt ist, und einen Kragen (23) aufweist, der auf dem anderen Körper (7) des ersten und des zweiten Körpers gebildet wird, im Wesentlichen koaxial mit der Rotationsachse ist und eine vordere Fläche (24) zum Anstoßen des länglichen Elements (22) und mindestens eine im Wesentlichen längliche Nut (25), die nahe seiner äußerten seitlichen Fläche gebildet wird, für den Eingriff durch das längliche Element besitzt, wobei das längliche Element geeignet ist, eine Sperrkonfiguration, bei der es an die vordere Anstoßfläche (24) stößt und dadurch, dass es ein Hindernis darstellt, geeignet ist, den gegenseitigen Eingriff des ersten und des zweiten Körpers zu verhindern, wobei die ersten und die zweiten Zähne voneinander entkuppelt sind, und eine Lösekonfiguration einzunehmen, bei der es mit der Nut gekuppelt und geeignet ist, entlang der Richtung (B) zu gleiten, um den gegenseitigen Eingriff des ersten und des zweiten Körpers zu erlauben, wobei die ersten und die zweiten Zähne ineinander greifen können.

2. Kupplung gemäß Anspruch 1, **dadurch gekennzeichnet, dass** das längliche Element (22) mit einer Längsachse versehen ist, die im Wesentlichen parallel zu der Richtung ist und sich mit einer hin- und hergehenden, geradlinigen Bewegung ihr entlang bewegen kann.

3. Kupplung gemäß einem oder mehr der vorangegangenen Ansprüche, **dadurch gekennzeichnet, dass** das längliche Element so eingesteckt wird, dass es in einem Sitz, der im ersten oder im zweiten Körper gebildet wird, axial gleiten kann, und so, dass es ein erstes Ende hat, das aus dem Sitz herausragt.

4. Kupplung gemäß einem oder mehr der vorangegangenen Ansprüche, **dadurch gekennzeichnet, dass** sie eine Schiebereinrichtung (29) aufweist, die mit dem länglichen Element verbunden ist und geeignet ist, sie in der gesperrten Konfiguration zu halten.

5. Kupplung gemäß einem oder mehr der vorangegangenen Ansprüche, **dadurch gekennzeichnet**, das die Schiebereinrichtung mindestens eine vorspannbare Druckfeder aufweist, die in den Sitz aufgenommen werden kann.

6. Kupplung gemäß einem oder mehr der vorangegangenen Ansprüche, **dadurch gekennzeichnet, dass** der Sitz eine Fläche (31) zum Stoppen des Gleitens des länglichen Elements in der Sperrkonfiguration aufweist, wobei das sperrende Element mit einer komplementär geformten Anstoßfläche (27a) versehen ist.

7. Kupplung gemäß einem oder mehr der vorangegangenen Ansprüche, **dadurch gekennzeichnet, dass** der Kragen (23) mit einer Vielzahl der Nuten (25) versehen ist, die, in einem Schnitt in rechten winkeln zur Rotationsachse betrachtet, in einem gleichmäßigen Abstand verteilt sind.

8. Kupplung gemäß einem oder mehr der vorangegangenen Ansprüche, **dadurch gekennzeichnet, dass** die Zahl der Nuten gleich der Zahl der Zähne des ersten oder des zweiten Körpers ist, wobei jede Nut nahe einer Seite eines entsprechenden Zahns gebildet wird.

9. Kupplung gemäß einem oder mehr der vorangegangenen Ansprüche, **dadurch gekennzeichnet, dass** die Nuten im Wesentlichen parallel zur Rotationsachse verlaufen.

10. Kupplung gemäß einem oder mehr der vorangegangenen Ansprüche, **dadurch gekennzeichnet, dass** die Nuten eine Unterseite haben, die in der Sperrkonfiguration mit dem ersten Ende des länglichen Elements im Wesentlichen bündig ist.

11. Kupplung gemäß einem oder mehr der vorangegangenen Ansprüche, **dadurch gekennzeichnet, dass** die Nuten eine Unterseite haben, die in der Sperrkonfiguration in Bezug auf die Rotationsachse in einem größeren radialen Abstand als das erste Ende des länglichen Elements (22) angeordnet ist, wobei die Unterseite mit einem Führungsprofil versehen ist, das geeignet ist, im Gegensatz zur schiebereinrichtung das erste Ende des länglichen Elements beim Übergang zwischen der Sperrkonfiguration und der Lösekonfiguration aufzunehmen.

12. Kupplung gemäß einem oder mehr der vorangegangenen Ansprüche, **dadurch gekennzeichnet, dass** der Kragen (23) mit einem Nocken versehen ist, der auf seiner äußeren seitlichen Fläche gebildet wird und entlang dessen Profil, im Gegensatz zur Schiebereinrichtung, das erste Ende des länglichen Elements beim Übergang von der Lösekonfiguration in die Einrückkonfiguration des ersten und des zweiten Körpers gleiten kann.

13. Kupplung gemäß einem oder mehr der vorangegangenen Ansprüche, **dadurch gekennzeichnet, dass** das Profil des Nockens, in einem Schnitt in rechten Winkeln zur Rotationsachse betrachtet, Mulden aufweist, die an den Nuten gebildet werden und seitlich in krummlinige Bögen übergehen.

14. Kupplung gemäß einem oder mehr der vorangegangenen Ansprüche, **dadurch gekennzeichnet, dass** die Mulden mit einer Rampe für das Gleiten des ersten Endes des länglichen Elements versehen sind, die es beim Übergang von der Ausrückkonfiguration in die Einrückkonfiguration den ersten und den zweiten Zähnen erlaubt, sich einander vollständig zuzuwenden, bevor sie ineinander greifen.

15. Kupplung gemäß einem oder mehr der vorangegangenen Ansprüche, **dadurch gekennzeichnet, dass** die Vorderseite des Kragens durch einen Ring gebildet wird, der im Wesentlichen kegelstumpfförmig ist und dessen Mantellinie eine gerade Linie ist, die im Wesentlichen parallel zur Längsachse des länglichen Elements verläuft.

16. Kupplung gemäß einem oder mehr der vorangegangenen Ansprüche, **dadurch gekennzeichnet, dass** in der Sperrkonfiguration die Vorderseite die äußere seitliche Fläche des länglichen Elements berührt, wobei die Berührung geeignet ist, die Entstehung von Kräften entlang der Richtung zu vermeiden.

17. Kupplung gemäß einem oder mehr der vorangegangenen Ansprüche, **dadurch gekennzeichnet, dass** in der Lösekonfiguration das erste Ende des länglichen Elements das Profil der Nut berührt.

18. Kupplung gemäß einem oder mehr der vorangegangenen Ansprüche, **dadurch gekennzeichnet, dass** in der Einrückkonfiguration das erste Ende des länglichen Elements einen krummlinigen Bogen des Profils des Nockens berührt.

19. Kupplung gemäß einem oder mehr der vorangegangenen Ansprüche, **dadurch gekennzeichnet, dass** der Kragen so gebildet wird, dass er aus der Fläche des ersten oder des zweiten Körpers, bei dem die entsprechenden ersten und zweiten Zähne vorgesehen sind, herausragt und in Bezug auf sie herausragt, wobei im anderen Körper, dem ersten bzw. dem zweiten, eine komplementäre Höhlung gebildet wird, um den Kragen in der Einrückkonfiguration aufzunehmen, wobei die Zähne des anderen Körpers in Bezug auf die Höhlung herausragen.

20. Kupplung gemäß einem oder mehr der vorangegangenen Ansprüche, **dadurch gekennzeichnet, dass** das längliche Element durch eine zylindrische Stange gebildet wird, wobei das erste Ende eine krummlinige, konvexe Form hat.

21. Kupplung gemäß einem oder mehr der vorangegangenen Ansprüche, **dadurch gekennzeichnet, dass** zwischen zwei der ersten oder zweiten Zähne des ersten und des zweiten Körpers, in einem Schnitt in rechten Winkeln zur Rotationsachse betrachtet, ein entsprechender Raum gebildet wird, wobei der Raum im Umfang länger als die Zähne ist.

## Revendications

1. Accouplement à crabot embrayable et débrayable en rotation, monté autour d'un axe de rotation (A) et comprenant un premier corps embrayable (4), qui est pourvu de premières dents (5), peut tourner librement autour dudit axe de rotation et est fixe axialement par rapport au dit axe dans au moins une direction, et un second corps embrayable (7), qui est pourvu de secondes dents (8) qui font face aux dites premières dents (5) et peuvent être mises en prise avec lesdites dents, est couplé de façon à tourner autour dudit axe de rotation (A) et peut librement glisser axialement le long dudit axe entre une configuration d'embrayage, dans laquelle les secondes dents sont en prise avec les premières dents et les deux corps sont couplés de sorte à tourner rigidement ensemble, et une configuration de débrayage dans laquelle les secondes dents ne sont plus en prise avec les premières dents et les deux corps ne sont plus couplés l'un à l'autre, **caractérisé en ce qu'**il comprend au moins un élément sensiblement allonge (22) qui est associé à l'un (4) desdits premier et second corps (4, 7) de telle sorte qu'il peut se déplacer le long d'une direction (B) qui est inclinée par rapport au dit axe de rotation (A) ou par rapport à un axe qui est sensiblement parallèle à lui, et une bague (23), qui est formée sur l'autre corps (7) desdits premier et second corps, est sensiblement coaxiale par rapport au dit axe de rotation et possède une face avant (24) qui est prévue pour la mise en butée dudit élément allongé (22) et au moins une gorge sensiblement longitudinale (25) qui est formée proximité de sa surface latérale extérieure de sorte à venir s'apparier avec ledit élément allongé, ledit élément allongé étant adapté pour assumer une configuration de blocage dans laquelle il vient en butée contre ladite face avant prévue pour la mise en butée (24) et est adapté pour empêcher, en
constituant un obstacle, le couplage desdits premier et second corps l'un à l'autre, les premières et secondes dents n'étant plus en prise les unes avec les autres, et une configuration de déblocage dans laquelle il est couplé à ladite gorge et il est adapté pour glisser le long de ladite direction (B) dans le but de permettre le couplage desdits premier et second corps l'un à l'autre, les premières et secondes dents étant aptes à se mettre en prise.

2. Accouplement selon la revendication 1, **caractérisé en ce que** ledit élément allongé (22) est pourvu d'un axe longitudinal qui est sensiblement parallèle à ladite direction et peut se déplacer en effectuant un mouvement de va et vient rectiligne le long de ladite direction.

3. Accouplement selon une ou plusieurs des revendications précédentes, **caractérisé en ce que** ledit élément allongé est inséré de telle sorte qu'il peut glisser axialement dans un siège formé dans l'un desdits premier et second corps et de telle sorte qu'il présente une première extrémité qui se projette en saillie à partir dudit siège.

4. Accouplement selon une ou plusieurs des revendications précédentes, **caractérisé en ce qu'**il comprend des moyens de poussée (29) qui sont associés au dit élément allongé et sont adaptés pour le maintenir dans ladite configuration de blocage.

5. Accouplement selon une ou plusieurs des revendications précédentes, **caractérisé en ce que** lesdits moyens de poussée comprennent au moins un ressort de compression préchargeable qui peut être logé dans ledit siège.

6. Accouplement selon une ou plusieurs des revendications précédentes, **caractérisé en ce que** ledit siège comprend une surface (31) qui est prévue pour arrêter le glissement dudit élément allongé dans ladite configuration de blocage, ledit élément de blocage étant pourvu d'une surface de mise en butée de forme complémentaire (27a).

7. Accouplement selon une ou plusieurs des revendications précédentes, **caractérisé en ce que** ladite bague (23) est pourvue d'une pluralité desdites gorges (25) qui, dans une vue en coupe prise à angle droit par rapport au dit axe de rotation, sont distribuées selon un écartement constant.

8. Accouplement selon une ou plusieurs des revendications précédentes, **caractérisé en ce que** le nombre desdites gorges est égal au nombre desdites dents des premier ou second corps, chaque gorge étant formée à proximité d'un côté d'une dent respective.

9. Accouplement selon une ou plusieurs des revendications précédentes, **caractérisé en ce que** lesdites gorges s'étendent sensiblement parallèlement au dit axe de rotation.

10. Accouplement selon une ou plusieurs des revendications précédentes, **caractérisé en ce que** lesdites gorges ont un fond qui affleure sensiblement ladite première extrémité de l'élément allongé dans ladite configuration de blocage.

11. Accouplement selon une ou plusieurs des revendications précédentes, **caractérisé en ce que** lesdites gorges ont un fond qui est placé à une distance radiale plus élevée, par rapport au dit axe de rotation, que ladite première extrémité de l'élément allongé (22) dans ladite configuration de blocage, ledit fond étant pourvu d'un profil de guidage qui est adapté pour recevoir, à la différence desdits moyens de poussée, ladite première extrémité de l'élément allongé dans la transition entre ladite configuration de blocage et ladite configuration de déblocage.

12. Accouplement selon une ou plusieurs des revendications précédentes, **caractérisé en ce que** ladite bague (23) est pourvue d'une came qui est formée sur sa surface latérale extérieure et le long du profil de laquelle ladite première extrémité de l'élément allongé peut glisser, à la différence desdits moyens de poussée, dans la transition entre ladite configuration de déblocage et ladite configuration de mise en prise des premier et second corps.

13. Accouplement selon une ou plusieurs des revendications précédentes, **caractérisé en ce que** ledit profil de la came, dans une vue en coupe prise à angle droit par rapport au dit axe de rotation, comprend des goulottes qui sont formées au niveau desdites gorges et qui sont latéralement mélangées à des arcs curvilinéaires.

14. Accouplement selon une ou plusieurs des revendications précédentes, **caractérisé en ce que** lesdites goulottes sont pourvues d'une rampe pour le glissement de ladite première extrémité de l'élément allongé, ce qui permet, dans la transition entre ladite configuration de débrayage et ladite configuration d'embrayage, aux dites premières et secondes dents d'être complètement en face les unes des autres avant de se mettre en prise.

15. Accouplement selon une ou plusieurs des revendications précédentes, **caractérisé en ce que** la face avant de ladite bague est formée par un anneau qui est sensiblement frustoconique et dont la ligne génératrice est une ligne droite qui est sensiblement parallèle au dit axe longitudinal de l'élément allongé.

16. Accouplement selon une ou plusieurs des revendications précédentes, **caractérisé en ce que** dans ladite configuration de blocage ladite face avant est en contact avec la surface latérale extérieure dudit élément allongé, ledit contact étant adapté pour éviter la génération de forces le long de ladite direction.

17. Accouplement selon une ou plusieurs des revendications précédentes, **caractérisé en ce que** dans ladite configuration de déblocage ladite première extrémité de l'élément allongé est en contact avec le profil de ladite gorge.

18. Accouplement selon une ou plusieurs des revendications précédentes, **caractérisé en ce que** dans ladite configuration de blocage, ladite première extrémité de l'élément allongé est en contact avec un arc curvilinéaire du profil de ladite came.

19. Accouplement selon une au plusieurs des revendications précédentes, **caractérisé en ce que** ladite bague est formée de sorte à se projeter en saillie à partir de la face de l'un desdits premier et second corps au niveau duquel les premières et secondes dents respectives sont placées et il fait saillie par rapport à elles, une cavité complémentaire étant formée dans l'autre desdits premier et second corps dans le but de recevoir ladite bague dans ladite configuration d'embrayage, les dents dudit autre corps se projetant en saillie par rapport à ladite cavité.

20. Accouplement selon une ou plusieurs des revendications précédentes, **caractérisé en ce que** ledit élément allongé est constitué par une tige cylindrique, ladite première extrémité ayant une forme convexe curvilinéaire.

21. Accouplement selon une ou plusieurs des revendications précédentes, **caractérisé en ce qu'**un espace respectif est formé entre deux desdites premières ou secondes dents des premier et second corps, dans une vue en coupe prise à angle droit par rapport au dit axe de rotation, lesdits espaces étant plus longs que lesdites dents dans le sens de la circonférence.
